Europäisches Patentamt

(19) European Patent Office (11) Numéro de publication: **0 159 308**

Office européen des brevets **B1**

## (12) FASCICULE DE BREVET EUROPÉEN

(45) Date de publication du fascicule du brevet:
**25.01.89**

(21) Numéro de dépôt: **85870042.0**

(22) Date de dépôt: **20.03.85**

(51) Int. Cl.⁴: **A 61 C 3/06**

(54) **Outil rotatif et méthode pour la confection de protheses totales en resine synthetique.**

(30) Priorité: **21.03.84 BE 212605**

(43) Date de publication de la demande:
**23.10.85 Bulletin 85/43**

(45) Mention de la délivrance du brevet:
**25.01.89 Bulletin 89/4**

(84) Etats contractants désignés:
**AT BE CH DE FR GB IT LI LU NL SE**

(56) Documents cité:
**EP-A-0 025 645**
**BE-A-845 059**
**US-A-2 807 264**
**US-B-4 219 004**

(73) Titulaire: **Eeckman, Fernand, Nekkervijverstraat 2,
B-9110 Sint Amandsberg- Gent (BE)**
Titulaire: **Eeckman- Valcke, Denise,
Nekkervijverstraat 2, B-9110 Sint Amandsberg-
Gent (BE)**

(72) Inventeur: **Eeckman, Fernand, Nekkervijverstraat 2,
B-9110 Sint Amandsberg- Gent (BE)**
Inventeur: **Eeckman- Valcke, Denise,
Nekkervijverstraat 2, B-9110 Sint Amandsberg-
Gent (BE)**

(74) Mandataire: **De Palmenaer, Roger, Bureau Vander
Haeghen 63, avenue de la Toison d'Or, B-1060
Bruxelles (BE)**

## Description

La présente invention est relative à un outil rotatif profilé et à un procédé pour ajuster par meulage le profil du bord des bourrelets de porte-empreintes individuels et de prothèses dentaires mobiles inférieures et/ou supérieures.

Elle trouve sa principale application dans la confection et l'achèvement de restaurations prothétiques en résine synthétique, pour édentés complets en particulier suivant la méthode du Professeur J. SCHREInEMAKERS et mérite à ce titre sa place dans les laboratoires de prothèses dentaires et les cabinets de dentistes.

Une prothèse dentaire adjointe n'est excellente que si elle reconstitue soigneusement l'arcade dentaire intitiale. Elle doit non seulement restaurer le mieux possible l'esthétique, mais elle doit également être confortable et adhérer suffisamment que pour permettre une mastication la plus efficace possible et permettre une phonation parfaite sans toutefois enserrer les gencives ni permettre le bourrage alimentaire. Cette adhérence est difficile à obtenir surtout au maxillaire inférieur en raison des mouvements de la langue.

L'ouvrage intitulé "Die Logik in der Totalprothetik" publié par le Professeur J. SCHREINEMAKERS, aux Editions "Die Quintessenz" en 1979 jouit d'une renommée mondiale. Il a été écrit en allemand et traduit en anglais, italien, japonais. Il expose une approche théorique et décrit une méthode pour confectionner une prothèse mobile pour édentés complets d'au moins un des maxillaires. L'absence totale de dents, en particulier au maxillaire inférieur, oblige le spécialiste a concevoir une prothèse prenant appui sur les muqueuses.

La méthode comprend une prise d'empreinte précise avec pâte spéciale appliquée sur un porte-empreinte préfabriqué et confection d'un modèle en plâtre qui servira à modeler une ébauche d'un porte-empreinte individuel en résine synthétique.

La confection suivant cette méthode, d'une prothèse totale en résine synthétique demande beaucoup de temps et d'adresse, pour munir le bourrelet lingual de la prothèse achevée de la profondeur gingivale souhaitée et avant tout de la dimension prescrite correspondant à une épaisseur constante de 2.0 et 3.0 mm de la plaque-base dans la zone sub-linguale et respectivement intra-linguale.

Le brevet belge n° 845.059 (SMIT) décrit une méthode pour arrondir les rebords d'une prothèse dentaire en matière synthétique. On y utilise un organe rotatif abrasif constitué d'une fraise munie d'une tête ronde et dont le corps présente, en coupe axiale, un évidement annulaire de section semi-circulaire. L'évidement a un rayon de courbure de 0.8 - 2.5 mm, en particulier de 1.3 - 1.8 mm.

En raison de l'évasement des flancs de la rainure de cette fraise, il n'est pas possible de déterminer par un mouvement de la main, l'épaisseur exacte à donner au rebord de la prothèse.

La forme de la rainure est plutôt prévue pour s'adapter aux variations d'épaisseur aux divers endroits de la plaque de base d'une même prothèse.

Le brevet belge N° 845.059 ne permet donc pas de réaliser une prothèse dont la plaque-base présente une épaisseur homogène correspondant aux dimensions requises par la méthode du Professeur SCHREINEMAKERS, c-à-d 3.0 et 2.0 mm.

On connaît par le document EP-A-25.645 un outil rotatif destiné à réduire les dimensions d'une dent ou à préparer une cavité dans une dent en vue de son remplissage. Cet outil se présente sous la forme d'une série d'anneaux coaxiaux juxtaposés le long d'une tige ou de disques plats séparés par des rainures dont le fond est arrondi. La surface de ces anneaux ou disques et de ces rainures est recouverte d'une matière abrasive.

L'outil selon le document EP-A-25.645 est destiné à un tout autre usage que l'outil selon la présente invention.

Si on utilisait un des outils décrits dans le document EP-A-25.645 pour ajuster le profil du bord des bourrelets d'un porte-empreinte ou d'une prothèse dentaire, on serait amené inévitablement à réduire exagérément l'épaisseur du bourrelet du porte-empreinte ou de la prothèse par le contact des faces opposées de la rainure avec chacune des faces du bourrelet sur une bande prédéterminée correspondant à la profondeur de la rainure.

La confection d'une prothèse comprend les étapes conventionnelles suivantes:

1.  la prise d'une première empreinte avec un porte-empreinte standard;
2.  le moulage d'une première empreinte en plâtre;
3.  le marquage des lignes limites exactes sur le modèle de plâtre;
4.  le façonnement du porte-empreinte individuel;
5.  la prise d'une empreinte individuelle avec un porte-empreinte individuel;
6.  le cloisonnement de l'empreinte définitive;
7.  le moulage de l'empreinte définitive;
8.  l'enregistrement de la mâchoire;
9.  la répartition de la pression sur une saillie en aluminium;
10. le façonnement d'une ébauche;
11. l'achèvement de la prothèse dentaire.

La prise d'empreinte se fait sous pression digitale contrôlée de l'opérateur pendant que le patient effectue des mouvements mandibulaires et linguaux. Ceci permet d'obtenir le relief des muqueuses d'appui.

La méthode SCHREINEMAKERS comporte une prise précise d'une empreinte à l'aide d'une pâte spéciale à l'aide d'un porte-empreinte standard du même auteur.

La prise d'empreinte donne la possibilité de confectionner un modèle en plâtre sur lequel on indique la ligne exacte de limitation au crayon d'aniline, pour ensuite confectionner le porte-empreinte individuel en matière synthétique selon la méthode SCHREINEMAKERS.

Pour confectionner le porte-empreinte individuel, on pétrit sur une planche enduite d'huile, un mélange de deux composants dont l'un est constitué de polyméthacrylate en poudre, de pigment et d'un initiateur, par exemple peroxyde de benzoyle, et une solution de durcisseur, les composants étant commercialisés sous le nom de KERR-FORMATRAY de manière à obtenir une pâte malléable que l'on étend en une couche mince présentant une épaisseur homogène d'environ 2 à 3 millimètres. On applique la couche pâteuse à la manière d'une pâte à modeler, en la palpant avec les doigts contre le modèle de plâtre de manière à recouvrir l'os alvéolaire. On constitue ainsi la plaque de base du porte-empreinte individuel à partir duquel on réalisera la prothèse définitive.

Lors du durcissement du matériau synthétique, la ligne de limitation se transmet d'elle-même sur le matériau. On peut raccourcir les rebords jusqu'à la ligne de limitation.

En cela on utilise un outil rotatif traditionnel, sous un angle de 90° par rapport à la surface intérieure de la plaque-base en résine.

De part et d'autre de la crête de la gencive, on indique à l'aide d'un crayon doux, la ligne limite linguale qui délimitera le bourrelet.

Le bourrelet doit présenter un rebord adouci à hauteur de la ligne sublinguale en contact avec le muscle généoglosse, 1,5 cm à gauche et à droite de la ligne médiane et avoir une épaisseur de 3.0 mm. Il faut donc, par des retouches successives, ajuster la plaque-base.

Selon les techniques connues, on utilise des instruments rotatifs traditionnels.

A partir de 1,5 cm à gauche et à droite de la ligne médiane, la plaque base ne dépassera pas la ligne mylohyoidea et englobera le domaine des tubercules-retromolaires. Cette zone aura une épaisseur de 2 mm.

Pour adoucir les rebords des bourrelets d'occlusion ainsi obtenus, on a utilisé jusqu'à ce jour des meules tronconiques à sommet a arrondi.

La confection de rebords arrondis présentant un congé parfaitement circulaire de 3 et respectivement 2,0 mm, demandait énormément d'adresse et de patience.

La présente invention a pour but de remédier aux inconvénients et procure dans ce but un procédé rigoureux pour réaliser les dimensions prescrites sous un angle de 90° par rapport à la surface intérieure d'une prothèse.

L'invention permet une simplification, par rapport aux méthodes traditionnelles laborieuses, de parachèvement des dimensions dans la zone sublinguale et dans la zone s'étendant du domaine sublingual au domaine des tubercules rétromolaires des porte-empreintes individuels et des parties inférieures des prothèses définitives.

Elle sert à raccourcir les bords des porteempreintes fonctionnels jusqu'à la ligne de limitation en réalisant l'épaisseur prescrite et en réalisant des bords ronds sans perte de dimension.

L'invention concerne un outil rotatif abrasif profilé pour ajuster, par meulage, le profil du bord des bourrelets de porte-empreintes individuels ou de prothèses dentaires mobiles inférieures et/ou supérieures, présentant une tête et deux rainures annulaires coaxiales de section transversale sensiblement semi-circulaire ou semi-elliptique ayant des largeurs différentes respectivement de 3,2 mm et 2,2 mm séparées par un tronçon cylindrique, la première rainure de 3,2 mm de large étant destinée à réaliser et à corriger les bords des porte-empreintes individuels et des prothèses dentaires dans une zone sublinguale et la seconde rainure de 2,2 mm de large étant destinée à réaliser et à corriger les bords susdits dans un domaine allant de la zone sublinguale jusqu'au domaine des tubercules rétromolaires, les bords périphériques des rainures étant formés par des arêtes circulaires.

Les rainures annulaires coaxiales ayant respectivement une largeur de 3,2 et 2,2 mm, permettent de révéler une surépaisseur des bords des porte-empreintes et prothèses dentaires de la zone sublinguale jusqu'au domaine des tubercules rétromolaires.

Cette surépaisseur est ensuite éliminée à l'aide d'une meule.

L'outil rotatif suivant l'invention permet de gagner du temps puisqu'un même outil permet d'obtenir un bourrelet arrondi de 3,2 mm d'épaisseur dans la zone sublinguale (c'est-à-dire une zone qui s'étend sur une distance sensiblement égale à 1,5 cm de part et d'autre de la ligne médiane) et un bourrelet arrondi de 2,2 mm d'épaisseur dans le domaine allant de la zone sub- linguale jusqu'au domaine des tubercules rétro- molaires.

La différence de 0,2 mm sert en polissage des porte-empreintes individuels et des prothèses et on obtient ainsi les dimensions exactes de 3,0 mm et 2,0 mm selon SCHREINEMAKERS pour le bourrelet sublingual et le bourrelet occlusal.

La présente invention est donc également relative à un procédé pour réaliser et façonner les bourrelets de porte-empreintes individuels et de prothèses dentaires mobiles supérieures et inférieures à l'aide de l'outil rotatif selon la revendication 1. Ce procédé est caractérisé en ce qu'on arrondit le bord des bourrelets sur une partie déterminée de son épaisseur par meulage au contact d'une des rainures de l'outil tandis qu'on taille sur l'épaisseur restante dudit bord par meulage au contact du tronçon cylindrique de l'outil, un gradin en vue de révéler une surépaisseur que l'on élimine ensuite à l'aide d'une meule.

Le corps de l'outil rotatif comporte de préférence un cadre-support en acier inoxydable,

que l'on recouvre d'abrasif, de préférence d'une couche diamantée. Cette couche diamantée peut être déposée électrolytiquement à l'aide d'un alliage de nickel.

D'autres particularités et détails de l'invention apparaîtront au cours de la description détaillée suivante des dessins ci-joints, qui représentent une forme de réalisation de l'outil suivant l'invention et illustrent schématiquement sa mise en oeuvre.

Dans ces dessins:

- la figure 1 montre en élévation latérale un outil rotatif abrasif suivant l'invention;
- la figure 2 montre une empreinte brute en matériau synthétique dont une partie hachurée sera éliminée par meulage;
- la figure 3 illustre la mise en oeuvre d'un instrument rotatif sous un angle de 90° par rapport à la surface intérieure d'une prothèse;
- la figure 4 montre la section d'un évidement en forme d'échelon le long du rebord d'une prothèse dentaire, après qu'on ait éloigné l'outil rotatif représenté aux figures 1 et 3;
- la figure 5 illustre le comportement selon la loi de NEWTON d'une muqueuse sur laquelle prend appui un objet escarpé;
- la figure 6 illustre le comportement selon la loi de NEWTON d'une muqueuse par rapport à un objet à rebord arrondi égal a 3.0 mm;
- la figure 7 est une vue gingivale du montage inférieur d'une prothèse dentaire totale;
- la figure 8 est une coupe sagitale d'une mâchoire inférieure;
- la figure 9 est une vue en perspective d'un modèle en plâtre des gencives;
- la figure 10 illustre le ponçage de la plaque-base à l'aide de la tête diamantée de l'outil montré à la figure 1;
- les figures 11 et 12 illustrent la confection du rebord du bourrelet de la plaque-base inférieure dans la zone sublinguale et moyenne à l'aide des rainures de 2.2 et 3.2 mm. L'écart de 2/10 de mm avec la dimension de la prothèse parachevée sert de marge de sécurité pour un dernier polissage.

Dans ces figures, les mêmes notations de référence désignent des éléments identiques ou analogues.

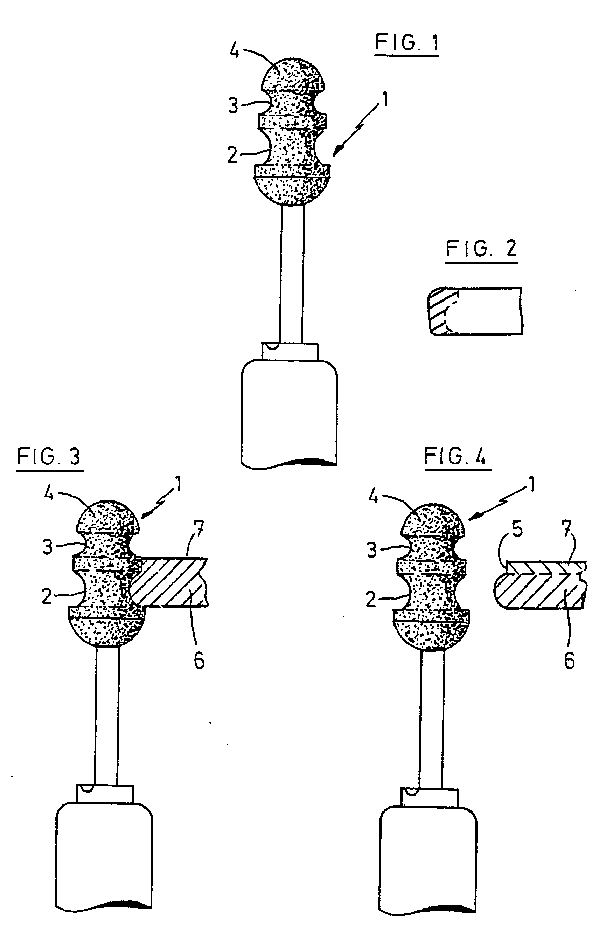

Comme illustré à la figure 1, l'outil rotatif abrasif suivant l'invention désigné dans son ensemble par la notation de référence 1, est une meule profilée, sur laquelle la concrétion abrasive est fixée éventuellement par dépôt électrolytique sur un profil comportant deux rainures annulaires 2 de section transversale semi-circulaire, de manière à maintenir des valeurs spécifiques de 2.2 et 3.2 mm pour la largeur des rebords.

L'outil rotatif est muni de deux rainures de section transversale semi-circulaires 2 et 3, avec des largeurs spécifiques de 2,2 et 3,2 mm afin de munir les rebords 8, 9 des porte-empreintes individuels 6 et le rebord lingual 8, 9 de la prothèse en matière synthétique de la profondeur définitive et de la dimension exacte de 2,0 et 3,0 mm.

A la partie supérieure, l'instrument rotatif porte une tête diamantée semi-sphérique 4.

Les deux évidements 2 et 3 possèdent des rebords anguleux ayant des largeurs de 3,2 et 2,2 mm à l'aide desquels on ménage d'un côté du rebord arrondi, un évidement en forme d'échelon 5, le long des rebords des porte-empreintes individuels et des prothèses 6 selon la méthode du Prof. J. SCHREINEMAKERS.

L'évidement en forme d'échelon 5 est destiné à visualiser une épaisseur trop importante du porte-empreinte individuel ou de la prothèse 6. La couche excédentaire 7 ainsi mise en lumière est éliminée à l'aide de la tête 4 de l'instrument rotatif 1.

Ce procédé permet de réaliser une plaque-base 11 avec une épaisseur ou dimension exacte de respectivement 3,0 et 2,0 mm. Des valeurs exactes pour les dimensions assurent une résistance mécanique suffisante de la prothèse dentaire et une fixation parfaite dans la bouche du patient.

Dans ce but, on distingue trois sortes de rebords:

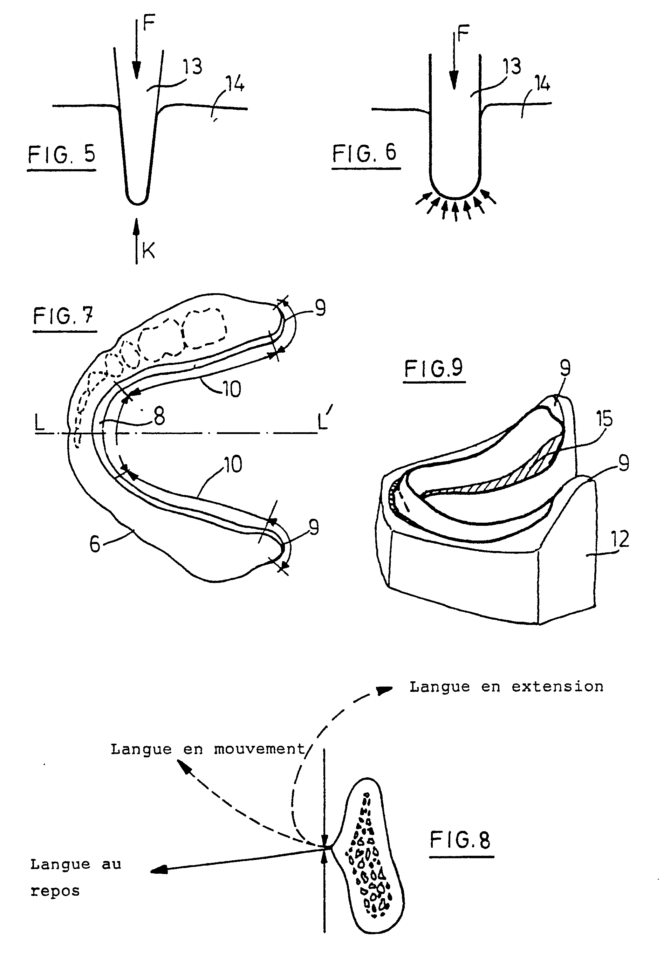

1. la zone sublinguale 8, qui s'étend sur une distance d'environ 1,5 cm de chaque côté de la ligne médiane L, L' (figure 7);
2. le domaine 10 allant de la zone sublinguale 8 jusqu'au domaine tubercule-rétromolaire 9 (figure 7);
3. le domaine tubercule-rétromolaire 9.

Dans la zone sublinguale 8 et dans le domaine 10 allant de la zone sublinguale 8 vers le domaine des tubercules-rétromolaires 9, la partie linguale de la prothèse 6 doit avoir la profondeur exacte du fond de la bouche. La profondeur du fond de bouche varie d'un patient à l'autre. Pour contrôler la largeur du bourrelet occlusal dans la zone sublinguale sur une distance égale à 1,5 cm à gauche et à droite de la ligne médiane avec une épaisseur de 3,0 mm comme illustré à la figure 1, on utilise la ranure 2; en dégageant le muscle mylohyoideus, on sait qu'on ne dépassera pas avec le porte-empreinte individuel la ligene mylohyoidea.

Vu que les muscles géneoglossus et mylohyoideus collaborent entre eux progressivement dès le moindre mouvement de la langue, pour élever ou abaisser le fond de la bouche, le muscle géneoglossus, qui s'étend dans la zone sublinguale, à 1,5 cm à gauche et à droite n'excèdera pas la fonction du muscle mylohyoideus (ligne mylohyoidea).

On utilise la ranure 3 d'une largeur maximale de 2,2 mm, telle que représentée à la figure 1 pour arrondir les rebords de l'empreinte ou de la prothèse dans le domaine 10.

Dans un prothèse totale définitive en matière synthétique injectée, on ne touche pas au rebord vestibulaire ni bucal de la prothèse supérieure ni inférieure, étant donné que les rebords sont formés par la pression foncitonnelle.

Il est cependant impérieux d'obtenir des rebords parfaitement ronds dans la zone 8 et dans le domaine 10.

Suivant la loi de Newton, toute force engendre une réaction d'égale intensité. Comme illustré à la figure 5, un objet effilé 13, s'enfonce dans une muqueuse 14 à une profondeur sous l'effet d'une force F. La réaction K agit sur l'extrémité effilée de l'objet.

La figure 6 démontre qu'il est avantageux de recourir à une empreinte présentant des contours d'épaisseur constante respectivement d'environ 3,0 mm et 2,0 mm avec un rebord parfaitement rond pour répartir cette force F. Le rebord de 3,0 mm d'épassier s'étend dans la zone sublinguale sur une distance égale à 1,5 cm à gauche et à droite de la ligne médiane, tandis que le rebord qui s'étend dans le domaine 10 à partir de 1,5 cm en direction du domaine des tubercules rétromolaires a une eépaisseur de 2,0 mm.

Comme illustré à la figure 8, l'épaisseur du rebord permet de maintenir la pression inférieure à la limite biomécanique d'élasticité des muqueuses 14. La zone de réaction des muqueuses s'étend sur tout le pourtour d'un dentier (figure 6).

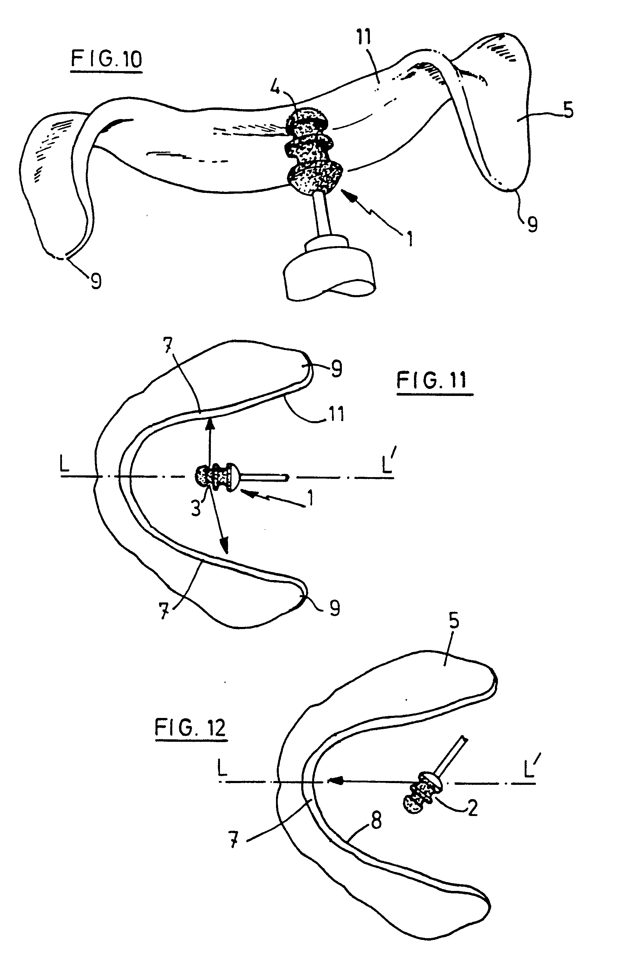

Lorsqu'on prévoit dans la zone centrale 10, une épaisseur de bord de 3,0 mm et confère à celle-ci une forme parfaitement ronde, la pression des muqueuses sur le rebord sera maintenue inférieure à la limite biomécanique d'élasticité des muqueuses, comme illustré à la figure 8 représentant une section sagittale d'une mâchoire inférieure reproduite par un modèle en plâtre 12 illustré dans la figure 9.

La combinaison des deux rainures susdites 2, 3 et de la tête de surfaçage 4 en un seul outil 1 est très appréciée des façonniers en prothèse dentaire, car elle permet d'effectuer aisément l'ensemble des travaux d'ajustage à la meule profilée des bourrelets occlusaux pour les adapter au relief de l'os alvéolaire et des muqueuses porteuses.

La tête semi-sphérique 4 permet d'effectuer les retouches nécessaires pour rendre l'épaisseur d'une plaque-base 11 conforme aux épaisseurs prescrites de 3 millimètres dans la zone médiane sublinguale 8 et de 2 mm dans la zone centrale 10 sur une distance de 2,5 cm environ en direction de chacun des tubercules rétromolaires 9 (Figure 7).

La première rainure 2 d'une largeur de 3,2 mm, permet d'ajuster par meulage le profil arrondi du sublingual du bourrelet occlusal dans la zone sublinguale proximale 8 de la plaque-base 11 inférieure qui reconstitue l'arcade dentaire du maxillaire inférieur sur une distance sensiblement égale à 1,5 cm de part et d'autre de la ligne médiane L, L' en direction de chacun des tubercules rétromolaires (Figure 12).

La seconde rainure 3, d'une largeur de 2,2 mm permet d'ajuster par meulage, le profil arrondi du bord central du bourrelet dans la zone intermédiaire 10 de la plaque-base inférieure 11 sur une distance sensiblement égale à 2,5 cm de part et d'autre de la zone sublinguale en direction de chacun des tubercules rétromolaires 20, 21 (Figure 4).

La figure 9 montre un modèle de plâtre 12 à l'aide duquel on modèle une ébauche d'un porte-empreinte individuel en résine synthétique.

On a indiqué sur ce modèle, à l'aide d'un crayon doux, la ligne limite sublinguale et la ligne intralinguale.

On ajuste par des retouches successives le bourrelet occlusal de la plaque-base en résine en enlevant la matière représentée par une zone hachurée 15.

L'outil 1 permet ensuite d'obtenir un congé parfaitement circulaire respectivement de 3 et 2 mm dans la zone sublinguale 8 et dans le domaine 10 du porte-empreinte individuel inférieur ou de la prothèse définitive.

L'instrument 1 est livrable pour pièces à main et pour contre-angle à des vitesses de rotation comprises entre 5.000 et 10.000 t/min.

**Revendications**

1. Outil rotatif abrasif profilé (1) pour ajuster par meulage, le profil du bord des bourrelets de porte-empreintes individuels et/ou de prothèses dentaires mobiles (6) inférieures et/ou supérieures, présentant une tête (4) et deux rainures annulaires coaxiales (2, 3) de section transversale sensiblement semi-circulaire ou semi-elliptique ayant des largeurs différentes respectivement de 3,2 mm et 2,2 mm séparées par un tronçon cylindrique, la première rainure (2) de 3,2 mm de large étant destinée à réaliser et à corriger les bords des porte-empreintes individuels et/ou des prothèses dentaires mobiles (6) dans une zone sublinguale (8) et la seconde rainure (3) de 2,2 mm de large étant destinée à réaliser et à corriger les bords susdits dans un domaine (10) allant de la zone sublinguale (8) jusqu' au domaine des tubercules rétromolaires (9), les bords périphériques des rainures (2, 3) étant formés par des arêtes circulaires.

2. Procédé pour réaliser et façonner les bourrelets de porte-empreintes individuels et/ou de prothèses dentaires totales mobiles supérieures et/ou inférieures (6) à l'aide d'un outil (1) selon la revendication 1, caractérisé en ce qu'on arrondit le bord des bourrelets sur une partie déterminée de son épaisseur par meulage au contact d'une des rainures (2, 3) de l'outil (1) tandis qu'on taille sur l'épaisseur restante dudit bord par meulage au contact du tronçon cylindrique de l'outil (1), un gradin (5) en vue de révéler une surépaisseur que l'on élimine ensuite à l'aide d'une meule.

## Patentansprüche

1. Rotierendes profiliertes Schleifwerkzeug (1) zur richtigen Gestaltung des Profils von Randwülsten individueller Abdruckträger und/oder nicht fixierter unterer und/oder oberer Zahnprothesen (6) durch Schleifen, welches einen Kopf (4) und zwei koaxiale Ringnuten (2, 3) mit im wesentlichen halbkreisförmigem oder halbelliptischem Querschnitt aufweist, die durch einen zylindrischen Abschnitt getrennt sind sowie unterschiedliche Breiten von 3,2 mm beziehungsweise 2,2 mm haben, wobei die erste Ringnut (2) mit 3,2 mm Breite zur Realisierung und Korrigierung der Ränder der individuellen Abdruckträger und/oder nicht fixierter Zahnprothesen (6) in einer sublingualen Zone (8) und die zweite Ringnut (3) mit 2,2 mm Breite zur Realisierung und Korrigierung der vorgenannten Ränder in dem Bereich (10), der sich von der sublingualen Zone (8) bis zu dem Bereich der tubercula retromolaria (9) erstreckt, bestimmt sind und die Umfangsränder der Nuten (2, 3) von Ringkanten gebildet werden.

2. Verfahren zur Realisierung und Formung der Wülste von individuellen Abdruckträgern und/oder nicht fixierten oberen und/oder unteren Totalzahnprothesen (6) mittels eines Werkzeugs gemäss Anspruch 1, dadurch gekennzeichnet, dass man den Rand der Wülste an einem durch ihre Dicke bestimmten Abschnitt durch Schleifen unter Kontakt mit einer der Nuten (2, 3) des Werkzeugs (1) abrundet, während man an der restlichen Dicke des genannten Randes durch Schleifen unter Kontakt mit dem zylindrischen Abschnitt des Werkzeugs (1) einen Absatz (5) einschneidet, um eine Überdicke hervorzuheben, die man durch einen anschliessenden Schleifvorgang entfernt.

## Claims

1. Countoured rotary dental grinding tool (1) intended for adjusting by grinding the contour of the edge of the rims of individual impression plates and/or movable upper and/or lower dental prostheses (6) comprising a head (4) and two annular coaxial recesses (2,3) with an essentially semi-circular or semi-elliptical cross-section being of different widths of 3,2 respectively 2,2 mm, separated by a cylindrical length, wherein the first recess (2), 3,2 mm wide, is intended for carrying out and corrigating the edges of individual impression plates and/or movable dental prostheses (6) in a sublingual area (8) and the second recess (3), 2,2 mm wide, is intended for creating and corrigating said edges in a zone (10) extending from the sublingual area (8) to the tubercula retromolaria (9), the peripheral edges of the recesses (2,3) being formed by circular edges.

2. Process for creating and shaping the rims of individual impression plates and/or complete movable upper and/or lower dental prostheses (6) using a tool (1) according to claim 1, characterized in that the edge of the rims are rounded within a part of their thickness by grinding in contact of one of the recesses (2, 3) of the tool (1), while a step-shaped recess (5) is created by grinding in contact of the cylindrical length of the tool (1) within the remaining thickness of said edge, in order to reveal excess of thickness which is then eliminated by means of a grinding tool.

FIG. 1

FIG. 2

FIG. 3

FIG. 4

1

FIG.10

FIG.11

FIG.12